# EUROPEAN PATENT APPLICATION

(11) **EP 4 693 058 A1**
(43) Date of publication of application: **11.02.2026**
(21) Application number: 24795794.7
(22) Date of filing: 03.04.2024
(51) Int. Cl.: G06F 15/163

(54) **DATA PROCESSING APPARATUS, LINK TRAINING METHOD, ELECTRONIC DEVICE, AND STORAGE MEDIUM**

(30) Priority: 28.04.2023 CN 202310490134
(71) Applicant: Sanechips Technology Co., Ltd., Shenzhen, Guangdong 518055 (CN)
(72) Inventor: LIU, Qingsong, Shenzhen, Guangdong 518055 (CN)
(74) Representative: Canzler & Bergmeier Patentanwälte Partnerschaft mbB
(86) International application number: PCT/CN2024/085902
(87) International publication number: WO 2024/222413

(57) **Abstract**

Provided in the present application are a data processing apparatus, a link training method, an electronic device, and a computer-readable storage medium. The data processing apparatus comprises a sending circuit and a receiving circuit, wherein the sending circuit comprises n parallel physical sending channels, and the receiving circuit comprises n parallel physical receiving channels, n being an integer greater than or equal to 2; each physical sending channel is configured to receive data from an upper layer, and to send the received data according to a first clock and a second clock; and each physical receiving channel is configured to receive, according to a third clock and a fourth clock, the data sent by each physical sending channel, and to cache the received data.

## Description

### CROSS REFERENCE TO RELATED APPLICATIONS

The present disclosure claims the priority to Chinese Patent Application No. 202310490134.5 filed on April 28, 2023, the contents of which are incorporated herein by reference in their entirety.

### TECHNICAL FIELD

The embodiments of the present disclosure relate to the field of multi-chip interconnect technology, and in particular, to a data processing apparatus, a link training method, an electronic device, and a computer-readable storage medium.

### BACKGROUND

With continuous improvement of social informatization, demand of information systems, which serve as a cornerstone of an information society, for performance and power consumption of chips is also increasingly improved. In the last decades, performance improvement and power optimization of the chips generally depend on an upgrade of the Integrated Circuit (IC) process technology. However, along with an exponential rise of cost of the upgrade of the IC process technology, Moore's law and Dennard scaling have gradually slowed down or even stagnated, resulting in lower and lower cost-effectiveness of improving performance and reducing power consumption of the chips by the upgrade of the IC process technology.

The chiplet heterogeneous integration technology is a heterogeneous chip technique which integrates a plurality of dies having specific functions into one package by the internal interconnect technology to form a dedicated function chip. By selecting a proper manufacturing process for each die having a corresponding function and performing flexible recombination of the dies, the chiplet heterogeneous integration technology, as compared with a System-on-Chip (SoC) integrated manufacturing process, significantly improves manufacturing yield and cost optimization space of the chips, and can effectively support flexible chip customization for a specific field to meet requirements of diversified chips development.

### SUMMARY

In a first aspect, an embodiment of the present disclosure provides a data processing apparatus, including: a sending circuit and a receiving circuit, where the sending circuit includes n parallel physical sending channels, the receiving circuit includes n parallel physical receiving channels, and n is an integer greater than or equal to 2; the physical sending channels are configured to receive data from an upper layer, and send the received data based on a first clock and a second clock; and the physical receiving channels are configured to receive the data sent by the physical sending channels based on a third clock and a fourth clock, and cache the received data.

In a second aspect, an embodiment of the present disclosure provides a link training method, including: configuring a data transmission rate of the above mentioned data processing apparatus; inputting test data into the physical sending channels of the data processing apparatus for data transmission; performing calibrations on the data processing apparatus by corresponding calibration modules in the data processing apparatus during the data transmission; after the calibrations are completed, scanning the data sent by the physical sending channels and the data received by the corresponding physical receiving channels; and adjusting the data transmission rate of the data processing apparatus based on the data sent by the physical sending channels and the data received by the corresponding physical receiving channels, and continuing to perform the operation of inputting the test data into the physical sending channels of the data processing apparatus for data transmission until the data transmission rate of the data processing apparatus is a highest data transmission rate meeting a preset requirement.

In a third aspect, an embodiment of the present disclosure provides an electronic device, including: the above mentioned data processing apparatus; at least one processor; and a memory having stored thereon at least one computer program which, when executed by the at least one processor, causes the at least one processor to implement the above mentioned link training method.

In a fourth aspect, an embodiment of the present disclosure provides a computer-readable storage medium having stored thereon a computer program which, when executed by a processor, causes the processor to implement the above mentioned link training method.

### BRIEF DESCRIPTION OF DRAWINGS

FIG. 1 is a block diagram of a data processing apparatus according to an embodiment of the present disclosure;
FIG. 2 is a block diagram of a sending circuit according to an embodiment of the present disclosure;
FIG. 3 is a block diagram of a receiving circuit according to an embodiment of the present disclosure;
FIG. 4 is a block diagram of a physical sending channel 201 according to an embodiment of the present disclosure;
FIG. 5 is a block diagram of a physical receiving channel 301 according to an embodiment of the present disclosure;
FIG. 6 is a block diagram of a fourth clock calibration module according to an embodiment of the present disclosure;
FIG. 7 is a block diagram of a fifth clock calibration module according to an embodiment of the present disclosure;
FIG. 8 is a block diagram of a first clock calibration module according to an embodiment of the present disclosure;
FIG. 9 is a block diagram of an offset voltage calibration module according to an embodiment of the present disclosure;
FIG. 10 is a block diagram of a receive sampling calibration module according to an embodiment of the present disclosure;
FIG. 11 is a block diagram of a second clock calibration module according to an embodiment of the present disclosure;
FIG. 12 is a block diagram of a third clock calibration module according to an embodiment of the present disclosure;
FIG. 13 is a block diagram of a sixth clock calibration module according to an embodiment of the present disclosure;
FIG. 14 is a schematic diagram of a circuit structure of a data processing apparatus according to an example of the embodiments of the present disclosure;
FIG. 15 is a flowchart illustrating a link training method according to an embodiment of the present disclosure; and
FIG. 16 is a block diagram of an electronic device according to an embodiment of the present disclosure.

### DETAIL DESCRIPTION OF EMBODIMENTS

In order to enable those of ordinary skill in the art to better understand the technical solutions of the present disclosure, a data processing apparatus, a link training method, and an electronic device provided in the present disclosure are described in detail below with reference to the drawings.

Exemplary embodiments will be described more fully below with reference to the drawings, but the exemplary embodiments described herein may be embodied in different forms, and the present disclosure should not be interpreted as being limited to the embodiments described herein. The embodiments are provided to make the present disclosure more thorough and complete and enable those of ordinary skill in the art to fully understand the scope of the present disclosure.

The embodiments described herein and the features therein can be combined with one another if no conflict is incurred.

The term "and/or" used herein includes any combination and all combinations of at least one associated listed item.

The terms used herein are merely used to describe specific embodiments, and do not limit the present disclosure. As used herein, "a" and "the" which indicate a singular form also include a plural form, unless expressly stated in the context. It should be further understood that the term "include" and/or the term "be made of" used herein indicates the presence of a particular feature, integer, operation, element and/or component, but do not exclude the presence or addition of at least one other feature, integer, operation, element, component and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

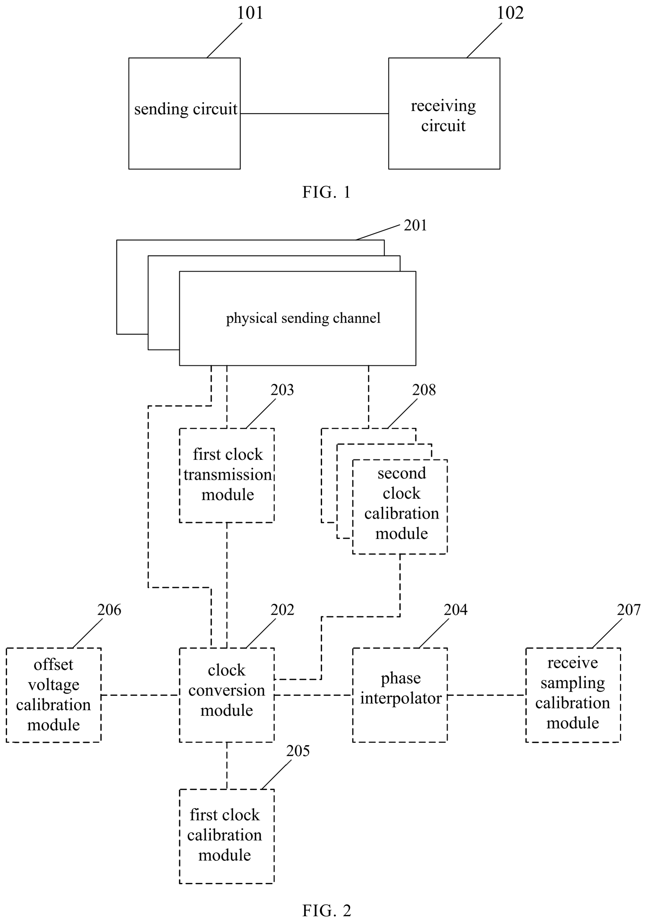

FIG. 1 is a block diagram of a data processing apparatus according to an embodiment of the present disclosure.

In a first aspect, referring to FIG. 1, an embodiment of the present disclosure provides a data processing apparatus, which is applicable to any chip interconnect scenario demanding high bandwidth and low latency, such as server processor chiplet integration, Artificial Intelligence (AI) computing array chiplet integration, SoC chiplet integration, automotive-grade chip chiplet integration, and Data Processing Unit (DPU) chiplet integration.

As shown in FIG. 1, the data processing apparatus includes a sending circuit 101 and a receiving circuit 102.

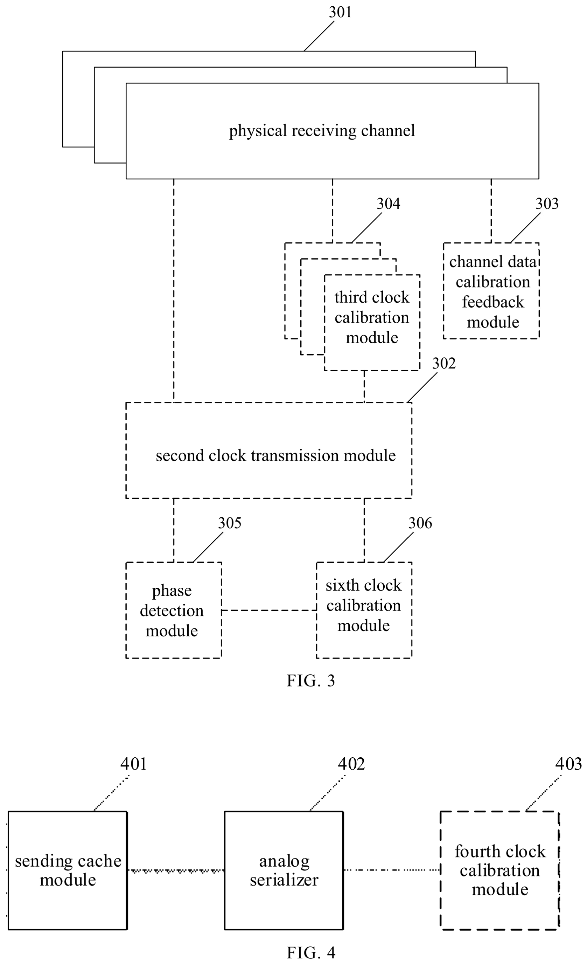

In some implementations, as shown in FIG. 2, the sending circuit 101 includes n parallel physical sending channels 201; as shown in FIG. 3, the receiving circuit 102 includes n parallel physical receiving channels 301; and n is an integer greater than or equal to 2.

In some implementations, the data processing apparatus includes a set of the sending circuit and the receiving circuit, with the n physical sending channels located on a first die, and the n physical receiving channels located on a second die.

In some implementations, the data processing apparatus includes a first set of the sending circuit and the receiving circuit and a second set of the sending circuit and the receiving circuit.

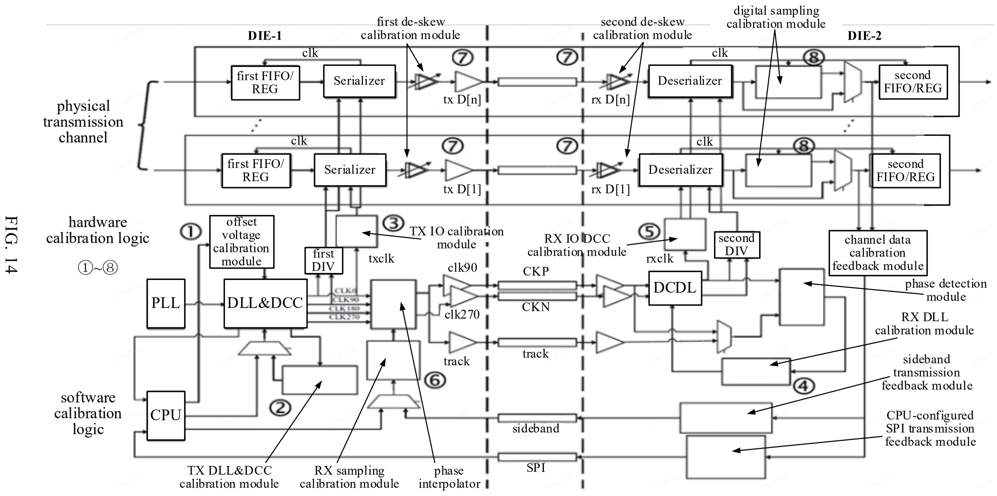

The n physical sending channels in the first set of the sending circuit and the receiving circuit and the n physical receiving channels in the second set of the sending circuit and the receiving circuit are located on the first die (e.g., DIE-1 shown in FIG. 14), and the n physical receiving channels in the first set of the sending circuit and the receiving circuit and the n physical sending channels in the second set of the sending circuit and the receiving circuit are located on the second die (e.g., DIE-2 shown in FIG. 14).

In some implementations, functions of the physical sending channels and the physical receiving channels located in the first die are implemented by the first die, and functions of the physical sending channels and the physical receiving channels located in the second die are implemented by the second die.

In some implementations, the n parallel physical sending channels and the n parallel physical receiving channels in the same set of the sending circuit and the receiving circuit are disposed in a one-to-one correspondence manner, and each physical sending channel and the corresponding physical receiving channel in the same set of the sending circuit and the receiving circuit form a physical transmission channel, that is, the n parallel physical sending channels and the n parallel physical receiving channels in the same set of the sending circuit and the receiving circuit form n parallel physical transmission channels, each of which includes one physical sending channel and one physical receiving channel.

In some implementations, the physical sending channels 201 are configured to receive data from an upper layer, and send the received data based on a first clock and a second clock; and the physical receiving channels 301 are configured to receive the data sent by the physical sending channels 201 based on a third clock and a fourth clock, and cache the received data.

In some implementations, as shown in FIG. 4, the physical sending channel 201 includes: a sending cache module 401 (e.g., a first FIFO/REG module (i.e., a first First In First Out module) shown in FIG. 14) configured to cache the data received from the upper layer; and an analog serializer 402 (e.g., a Serializer module shown in FIG. 14) configured to read the data from the sending cache module 401 based on the first clock and the second clock, and send the read data.

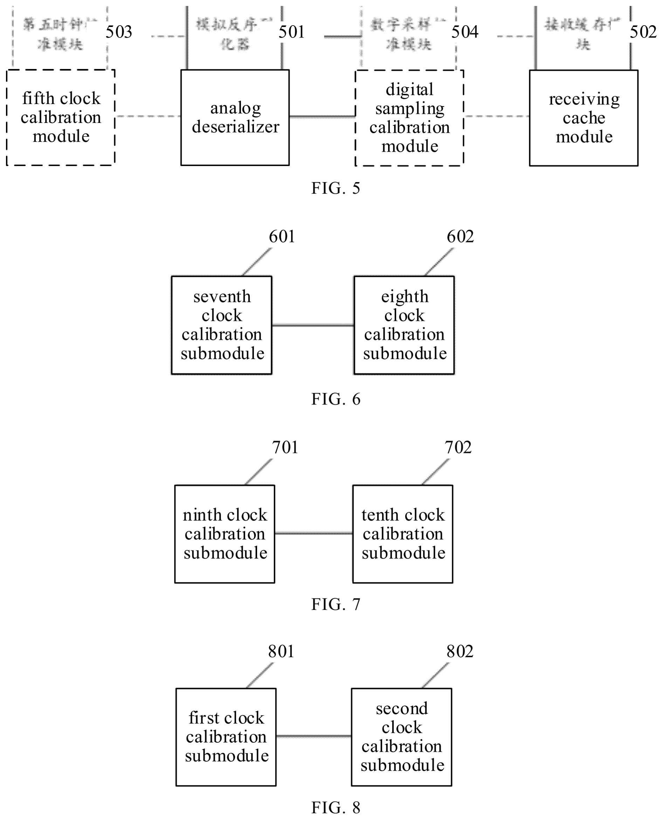

As shown in FIG. 5, the physical receiving channel 301 includes: an analog deserializer 501 (e.g., a Deserializer module shown in FIG. 14) configured to sample, based on the third clock and the fourth clock, the data sent by the physical sending channel 201; and a receiving cache module 502 (e.g., a second FIFO/REG shown in FIG. 14) configured to cache the sampled data.

In some implementations, the upper layer performs data synchronization and reorganization on the data cached by the n parallel physical receiving channels.

In some implementations, the analog serializer 402 and the analog deserializer 501 are implemented by analog circuits. Compared with the related technology, the n parallel physical transmission channels increase signal bandwidth of cross-die transmission, and significantly reduce timing crossing among channels and sampling delay of digital-analog paths, thereby reducing overall transmission delay and improving transmission reliability.

In some implementations, the physical sending channel 201 further includes: a fourth clock calibration module 403 (e.g., a first de-skew calibration module shown in FIG. 14) configured to perform fourth phase skew calibration on the data read by the analog serializer 402, and send the data subjected to the fourth phase skew calibration to the physical receiving channel 301.

The physical receiving channel 301 further includes: a fifth clock calibration module 503 (e.g., a second de-skew calibration module shown in FIG. 14) configured to perform fifth phase skew calibration on the data sent by the physical sending channel 201. The analog deserializer 501 is specifically configured to sample, based on the third clock and the fourth clock, the data subjected to the fifth phase skew calibration.

In some implementations, the fourth clock calibration modules 403 corresponding to the different physical sending channels are different.

In some implementations, a part of the physical sending channels corresponds to a same fourth clock calibration module 403. For example, the n physical sending channels are grouped, and each group includes A physical sending channels, where A is an integer greater than or equal to 1; and the fourth clock calibration modules 403 corresponding to the A physical sending channels in the same group are different, and the A fourth clock calibration modules 403 are multiplexed among different groups. Then, during the calibration, the A physical sending channels in the same group adopt the A fourth clock calibration modules 403 for parallel calibration, and the A physical sending channels in the different groups adopt the A fourth clock calibration modules 403 for series calibration. For example, 64 physical sending channels are divided into 8 groups, each group includes 8 physical sending channels, and 8 fourth clock calibration modules 403 are adopted for calibration; firstly, the 8 fourth clock calibration modules 403 are used to perform parallel calibration on the 8 physical sending channels in a first group, the 8 fourth clock calibration modules 403 are multiplexed to perform parallel calibration on the 8 physical sending channels in a second group after the calibration on the 8 physical sending channels in the first group is completed, the 8 fourth clock calibration modules 403 are multiplexed to perform parallel calibration on the 8 physical sending channels in a third group after the calibration on the 8 physical sending channels in the second group is completed, and so on until the calibration on the 64 physical sending channels is completed.

In some implementations, the fifth clock calibration modules 503 corresponding to the different physical receiving channels are different.

In some implementations, a part of the physical receiving channels corresponds to a same fifth clock calibration module 503. For example, the n physical receiving channels are grouped, and each group includes B physical receiving channels, where B is an integer greater than or equal to 1; and the fifth clock calibration modules 503 corresponding to the B physical receiving channels in the same group are different, and the B fifth clock calibration modules 503 are multiplexed among different groups. Then, during the calibration, the B physical receiving channels in the same group adopt the B fifth clock calibration modules 503 for parallel calibration, and the B physical receiving channels in the different groups adopt the B fifth clock calibration modules 503 for series calibration. For example, 64 physical receiving channels are divided into 8 groups, each group includes 8 physical receiving channels, and 8 fifth clock calibration modules 503 are adopted for calibration; firstly, the 8 fifth clock calibration modules 503 are used to perform parallel calibration on the 8 physical receiving channels in a first group, the 8 fifth clock calibration modules 503 are multiplexed to perform parallel calibration on the 8 physical receiving channels in a second group after the calibration on the 8 physical receiving channels in the first group is completed, the 8 fifth clock calibration modules 503 are multiplexed to perform parallel calibration on the 8 physical receiving channels in a third group after the calibration on the 8 physical receiving channels in the second group is completed, and so on until the calibration on the 64 physical receiving channels is completed.

In some implementations, the fourth clock calibration module 403 may be configured to perform the fourth phase skew calibration on the data read by the analog serializer 402 after a receive sampling calibration module 207 controls, based on the data received by the physical receiving channel 301 and a phase difference of a four-phase clock subjected to duty cycle adjustment which is output by a phase interpolator 204, an adjustment performed by the phase interpolator 204 on the phase difference of the four-phase clock subjected to duty cycle adjustment.

In some implementations, the fifth clock calibration module 503 may be configured to perform the fifth phase skew calibration on the data sent by the physical sending channel 201 after the receive sampling calibration module 207 controls, based on the data received by the physical receiving channel 301 and the phase difference of the four-phase clock subjected to duty cycle adjustment which is output by the phase interpolator 204, the adjustment performed by the phase interpolator 204 on the phase difference of the four-phase clock subjected to duty cycle adjustment.

In some implementations, the fourth clock calibration module 403 is specifically configured to: with a receive sampling calibration code P0 as a reference, scan, by taking a scanning step as a period, the phase difference of the four-phase clock subjected to duty cycle adjustment which is output by the phase interpolator 204 within a range from a previous preset step to a next preset step of a calibration flag corresponding to the receive sampling calibration code P0; determine a 1-bit calibration flag based on a scanning result and the data read by the analog serializer 402; continue to perform the operation of scanning, by taking the scanning step as the period, the phase difference of the four-phase clock subjected to duty cycle adjustment which is output by the phase interpolator 204 until a d-bit calibration flag is obtained, where d is an integer greater than or equal to 2; filter the d-bit calibration flag; determine a Pi calibration code corresponding to a currently calibrated physical sending channel based on a center position of a continuous correct sampling section in the scanning results corresponding to the filtered d-bit calibration flag, and take a difference between the Pi calibration code and the receive sampling calibration code P0 as a fourth clock calibration code corresponding to the currently calibrated physical sending channel; and perform the fourth phase skew calibration on the data read by the analog serializer 402 based on the fourth clock calibration code.

In some implementations, the phase difference scanned by the fourth clock calibration module 403 may be a phase difference between any two phase clocks, such as a phase difference between a second-phase clock and a first-phase clock or a phase difference between a third-phase clock and the first-phase clock.

In some implementations, the center position of the continuous correct sampling section in the scanning results corresponding to the filtered d-bit calibration flag corresponds to a 1-bit calibration flag, and a one-to-one corresponding relationship exists between the calibration flag and the Pi calibration code.

In some implementations, the fifth clock calibration module 503 is specifically configured to: with the receive sampling calibration code P0 as a reference, scan, by taking the scanning step as a period, the phase difference of the four-phase clock subjected to duty cycle adjustment which is output by the phase interpolator 204 within the range from the previous preset step to the next preset step of the calibration flag corresponding to the receive sampling calibration code P0; determine a 1-bit calibration flag based on a scanning result and the data read by the analog deserializer 501; continue to perform the operation of scanning, by taking the scanning step as the period, the phase difference of the four-phase clock subjected to duty cycle adjustment which is output by the phase interpolator 204 until a b-bit calibration flag is obtained, where b is an integer greater than or equal to 2; filter the b-bit calibration flag; determine a Pi calibration code corresponding to a currently calibrated physical receiving channel based on a center position of a continuous correct sampling section in the scanning results corresponding to the filtered b-bit calibration flag, and take a difference between the Pi calibration code and the receive sampling calibration code P0 as a fifth clock calibration code corresponding to the currently calibrated physical receiving channel; and perform the fifth phase skew calibration on the data sent by the physical sending channel 201 based on the fifth clock calibration code.

In some implementations, the phase difference scanned by the fifth clock calibration module 503 may be a phase difference between any two phase clocks, such as the phase difference between the second-phase clock and the first-phase clock or the phase difference between the third-phase clock and the first-phase clock.

In some implementations, the center position of the continuous correct sampling section in the scanning results corresponding to the filtered b-bit calibration flag corresponds to a 1-bit calibration flag, and a one-to-one corresponding relationship exists between the calibration flag and the Pi calibration code.

In some implementations, as shown in FIG. 6, the fourth clock calibration module 403 includes a hardware-implemented seventh clock calibration submodule 601 and a software-implemented eighth clock calibration submodule 602.

In a case where no fault of the hardware-implemented seventh clock calibration submodule 601 is detected, the hardware-implemented seventh clock calibration submodule 601 is used to perform the fourth phase skew calibration on the data read by the analog serializer 402, and send the data subjected to the fourth phase skew calibration to the physical receiving channel 301.

In a case where a fault of the hardware-implemented seventh clock calibration submodule 601 is detected, the software-implemented eighth clock calibration submodule 602 is used to perform the fourth phase skew calibration on the data read by the analog serializer 402, and send the data subjected to the fourth phase skew calibration to the physical receiving channel 301.

In some implementations, as shown in FIG. 7, the fifth clock calibration module 503 includes a hardware-implemented ninth clock calibration submodule 701 and a software-implemented tenth clock calibration submodule 702.

In a case where no fault of the hardware-implemented ninth clock calibration submodule 701 is detected, the hardware-implemented ninth clock calibration submodule 701 is used to perform the fifth phase skew calibration on the data sent by the physical sending channel 201.

In a case where a fault of the hardware-implemented ninth clock calibration submodule 701 is detected, the software-implemented tenth clock calibration submodule 702 is used to perform the fifth phase skew calibration on the data sent by the physical sending channel 201.

In some implementations, the fourth clock calibration module 403 and the fifth clock calibration module 503 are implemented by analog circuits, and eliminate delay skew between parallel transmission channels. Compared with digital circuits, the analog circuits can achieve finer delay adjustment and significantly reduce calibration delay.

In some implementations, the physical receiving channel 301 further includes a digital sampling calibration module 504 configured to perform a recovery process on the sampled data. The receiving cache module 502 is specifically configured to cache the recovered data.

In some implementations, the digital sampling calibration module 504 is specifically configured to perform the recovery process on the sampled data in a following way: mapping the sampled data to the recovered data based on a preset mapping relationship.

In some implementations, logic comparison may be performed on sampled test data during testing and a test data under normal conditions, so as to obtain the mapping relationship.

In some implementations, the sampled test data in two consecutive clock beats may be combined into 16-bit sampled test data, and subjected to logic comparison together with 16-bit test data under normal conditions, so as to obtain the mapping relationship.

In some implementations, the digital sampling calibration module 504 includes a hardware-implemented first digital sampling calibration submodule and a software-implemented second digital sampling calibration submodule.

In a case where no fault of the hardware-implemented first digital sampling calibration submodule is detected, the hardware-implemented first digital sampling calibration submodule is used to perform the recovery process on the sampled data.

In a case where a fault of the hardware-implemented first digital sampling calibration submodule is detected, the software-implemented second digital sampling calibration submodule is used to perform the recovery process on the sampled data.

In some implementations, the digital sampling calibration module 504 may assist in performing test functions such as channel inversion and channel repair during link initialization, and may further assist analog sampling calibration in performing link transmission, thereby improving transmission reliability of analog circuits.

In some implementations, the sending circuit 101 further includes: a clock conversion module 202 (e.g., a DLL&DCC (Delay Lock Loop & Duty Cycle Corrector) shown in FIG. 14), a first clock transmission module 203 (e.g., a first DIV (i.e., a first frequency divider) shown in FIG. 14), the phase interpolator 204, a first clock calibration module 205 (e.g., a TX DLL&DCC calibration module shown in FIG. 14), and an offset voltage calibration module 206. The receiving circuit 102 further includes: a second clock transmission module 302 (e.g., a DCDL (Digital-Controller Delay Line) and a second DIV (i.e., a second DIV module) shown in FIG. 14).

In some implementations, the clock conversion module 202 is configured to convert a single-ended clock output by a Phase Locked Loop (PLL) into a four-phase clock, perform duty cycle adjustment on the four-phase clock, and send a first-phase clock of the four-phase clock subjected to duty cycle adjustment to the physical sending channels 201 as the first clock.

In some implementations, the four-phase clock may include four clocks having phases of 0°, 90°, 180°, and 270° respectively, where the clock having the phase of 0° is the first-phase clock, the clock having the phase of 90° is the second-phase clock, the clock having the phase of 180° is the third-phase clock, and the clock having the phase of 270° is a fourth-phase clock.

In some implementations, the four-phase clock may include four clocks having phases of 0°, 45°, 90°, and 135° respectively, where the clock having the phase of 0° is the first-phase clock, the clock having the phase of 45° is the second-phase clock, the clock having the phase of 90° is the third-phase clock, and the clock having the phase of 135° is the fourth-phase clock.

In some implementations, the first clock transmission module 203 is configured to determine the second clock based on the first-phase clock and the second-phase clock of the four-phase clock subjected to duty cycle adjustment, and send the second clock to the physical sending channels 201.

In some implementations, the phase interpolator 204 is configured to perform adjustment on a phase difference of the four-phase clock subjected to duty cycle adjustment.

In some implementations, the phase interpolator 204 is specifically configured to: perform adjustment on a phase difference between the second-phase clock and the first-phase clock of the four-phase clock subjected to duty cycle adjustment, and perform adjustment on a phase difference between the third-phase clock and the first-phase clock of the four-phase clock subjected to duty cycle adjustment.

In some implementations, the second clock transmission module 302 is configured to send the second-phase clock of the four-phase clock subjected to duty cycle adjustment to the physical receiving channels 301 as the third clock, determine the fourth clock based on the second-phase clock and the third-phase clock of the four-phase clock subjected to duty cycle adjustment, and send the fourth clock to the physical receiving channels 301.

In some implementations, the first clock calibration module 205 is configured to perform first phase skew calibration on the clock conversion module 202.

In some implementations, the first clock calibration module 205 may perform the first phase skew calibration on the clock conversion module 202 subjected to voltage offset calibration.

In some implementations, the first clock calibration module 205 is specifically configured to: perform coarse adjustment calibration and fine adjustment calibration on a phase difference of the four-phase clock; and perform calibration on the phase difference of the four-phase clock subjected to duty cycle adjustment.

In some implementations, the first clock calibration module 205 is specifically configured to: in a DLL calibration mode, perform the coarse adjustment calibration and the fine adjustment calibration on the phase difference of the four-phase clock; and in a DCC calibration mode, perform the calibration on the phase difference of the four-phase clock subjected to duty cycle adjustment.

In some implementations, the first clock calibration module 205 is specifically configured to perform the coarse adjustment calibration and the fine adjustment calibration on the phase difference of the four-phase clock in a following way: setting an initial value of a coarse adjustment calibration code to 0; periodically sampling a comparison result from a comparator in the clock conversion module 202; adjusting the coarse adjustment calibration code based on a ratio of high level to low level in the sampled comparison results; performing adjustment on the phase difference of the four-phase clock based on the adjusted coarse adjustment calibration code; continuing to perform the operation of periodically sampling the comparison result from the comparator in the clock conversion module 202 until the ratio of high level to low level is 1; setting an initial value of a fine adjustment calibration code to 256; periodically sampling the comparison result from the comparator in the clock conversion module 202; adjusting the fine adjustment calibration code based on a ratio of high level to low level in the sampled comparison results; performing adjustment on the phase difference of the four-phase clock based on the adjusted fine adjustment calibration code; and continuing to perform the operation of periodically sampling the comparison result from the comparator in the clock conversion module 202 until the ratio of high level to low level is 1.

In some implementations, the first clock calibration module 205 may periodically sample the comparison result from the comparator in the clock conversion module 202 for X consecutive times, and x is an integer greater than or equal to 2.

The comparison result obtained by each time of sampling may be a high level or a low level.

In some implementations, the number of the high levels in the sampled comparison results is N1, and the number of the low levels in the sampled comparison results is N0, then the ratio of high level to low level is N1/N0.

In some implementations, the first clock calibration module 205 is specifically configured to adjust the coarse adjustment calibration code based on the ratio of high level to low level in the sampled comparison results in a following way: in a case where the ratio of high level to low level is greater than 1, reducing the coarse adjustment calibration code, such as reducing the coarse adjustment calibration code by 1; and in a case where the ratio of high level to low level is less than 1, increasing the coarse adjustment calibration code, such as increasing the coarse adjustment calibration code by 1.

In some implementations, after the coarse adjustment calibration is completed, the coarse adjustment calibration code when the ratio of high level to low level is 1 is latched and is not adjusted any more.

In some implementations, the first clock calibration module 205 is specifically configured to adjust the fine adjustment calibration code based on the ratio of high level to low level in the sampled comparison results in a following way: in a case where the ratio of high level to low level is greater than 1, increasing the fine adjustment calibration code, such as increasing the fine adjustment calibration code by 1; and in a case where the ratio of high level to low level is less than 1, reducing the fine adjustment calibration code, such as reducing the fine adjustment calibration code by 1.

In some implementations, after the fine adjustment calibration is completed, the fine adjustment calibration code when the ratio of high level to low level is 1 is latched and is not adjusted any more.

In some implementations, when performing the calibration on the phase difference of the four-phase clock subjected to duty cycle adjustment, the first clock calibration module 205 respectively calibrates the phase difference between the third-phase clock and the first-phase clock and a phase difference between the fourth-phase clock and the second-phase clock. The two calibration processes are the same.

In some implementations, the first clock calibration module 205 is specifically configured to perform the calibration on the phase difference of the four-phase clock subjected to duty cycle adjustment in a following way: during a change of a duty cycle calibration code from 0 to a preset maximum value, periodically sampling a comparison result from the comparator in the clock conversion module 202, and recording a first duty cycle calibration code when the sampled comparison result is jumped from a low level to a high level; during a change of the duty cycle calibration code from the preset maximum value to 0, periodically sampling the comparison result from the comparator in the clock conversion module 202, and recording a second duty cycle calibration code when the sampled comparison result is jumped from a low level to a high level; and performing adjustment on the phase difference of the four-phase clock subjected to duty cycle adjustment based on an average of the first duty cycle calibration code and the second duty cycle calibration code.

In some implementations, as shown in FIG. 8, the first clock calibration module 205 includes a hardware-implemented first clock calibration submodule 801 and a software-implemented second clock calibration submodule 802.

In a case where no fault of the hardware-implemented first clock calibration submodule 801 is detected, the hardware-implemented first clock calibration submodule 801 is used to perform the first phase skew calibration on the clock conversion module 202.

In a case where a fault of the hardware-implemented first clock calibration submodule 801 is detected, the software-implemented second clock calibration submodule 802 is used to perform the first phase skew calibration on the clock conversion module 202.

In some implementations, the offset voltage calibration module 206 is configured to perform voltage offset calibration on the clock conversion module 202.

In some implementations, the voltage offset calibration is calibration of clock skew and phase skew caused by voltage offset. By introducing the offset voltage calibration logic to the clock conversion module 202 serving as a direct clock source of the sending circuit 101 and the receiving circuit 102, stability of operation of the circuits can be improved.

In some implementations, the offset voltage calibration module 206 is specifically configured to: in an offset voltage calibration mode, perform offset voltage calibration on the clock conversion module 202.

In some implementations, the offset voltage calibration module 206 is specifically configured to: periodically sample a comparison result from the comparator in the clock conversion module 202; adjust an offset voltage control word based on a ratio of high level to low level in the sampled comparison results; adjust a voltage of the clock conversion module 202 based on the adjusted offset voltage control word; and continue to perform the operation of periodically sampling the comparison result from the comparator in the clock conversion module 202 until the ratio of high level to low level is 1.

In some implementations, the offset voltage calibration module 206 may periodically sample the comparison result from the comparator in the clock conversion module for X consecutive times, and x is an integer greater than or equal to 2.

The comparison result obtained by each time of sampling may be a high level or a low level.

In some implementations, the number of the high levels in the sampled comparison results is N1, and the number of the low levels in the sampled comparison results is N0, then the ratio of high level to low level is N1/N0.

In some implementations, the offset voltage calibration module 206 is specifically configured to adjust the offset voltage control word based on the ratio of high level to low level in the sampled comparison results in a following way: in a case where the ratio of high level to low level is greater than 1, reducing the offset voltage control word OFFSET, such as reducing the offset voltage control word OFFSET by 1; and in a case where the ratio of high level to low level is less than or equal to 1, increasing the offset voltage control word OFFSET, such as increasing the offset voltage control word OFFSET by 1.

In some implementations, after the offset voltage calibration is completed, the offset voltage control word when the ratio of high level to low level is 1 is latched and is not adjusted any more.

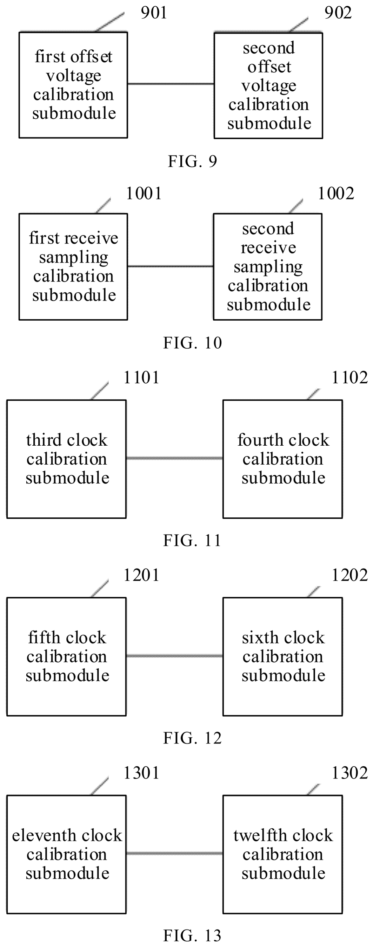

In some implementations, as shown in FIG. 9, the offset voltage calibration module 206 includes a hardware-implemented first offset voltage calibration submodule 901 and a software-implemented second offset voltage calibration submodule 902.

In a case where no fault of the hardware-implemented first offset voltage calibration submodule 901 is detected, the hardware-implemented first offset voltage calibration submodule 901 is used to perform the voltage offset calibration on the clock conversion module 202.

In a case where a fault of the hardware-implemented first offset voltage calibration submodule 901 is detected, the software-implemented second offset voltage calibration submodule 902 is used to perform the voltage offset calibration on the clock conversion module 202.

In some implementations, the receiving circuit 102 further includes a channel data calibration feedback module 303 configured to detect whether the data received by the physical receiving channels 301 is matched with expected data, and send the data received by the physical receiving channels 301 to the receive sampling calibration module of the sending circuit through a sideband transmission feedback module in a case where it is detected that the data received by the physical receiving channels 301 is matched with the expected data.

The sending circuit 101 further includes the receive sampling calibration module 207 (e.g., an RX sampling calibration module shown in FIG. 14) configured to control, based on the data received by the physical receiving channels 301 and the phase difference of the four-phase clock subjected to duty cycle adjustment which is output by the phase interpolator 204, the adjustment performed by the phase interpolator 204 on the phase difference of the four-phase clock subjected to duty cycle adjustment.

In some implementations, the channel data calibration feedback module 303 is specifically configured to: detect whether the data recovered by the physical receiving channels 301 is matched with the expected data, and send the data recovered by the physical receiving channels 301 to the receive sampling calibration module of the sending circuit through the sideband transmission feedback module in a case where it is detected that the data recovered by the physical receiving channels 301 is matched with the expected data.

In some implementations, the receive sampling calibration module 207 is specifically configured to: scan, by taking a preset step as a period, the phase difference of the four-phase clock subjected to duty cycle adjustment which is output by the phase interpolator 204; determine a 1-bit calibration flag based on a scanning result and the data received by the physical receiving channels 301; continue to perform the operation of scanning, by taking the preset step as the period, the phase difference of the four-phase clock subjected to duty cycle adjustment which is output by the phase interpolator 204 until an m-bit calibration flag is obtained, where m is an integer greater than or equal to 2; filter the m-bit calibration flag; determine a receive sampling calibration code based on a center position of a continuous correct sampling section in the scanning results corresponding to the filtered m-bit calibration flag; and control, based on the receive sampling calibration code, the adjustment performed by the phase interpolator 204 on the phase difference of the four-phase clock subjected to duty cycle adjustment.

In some implementations, the phase difference scanned by the receive sampling calibration module 207 may be a phase difference between any two phase clocks, such as the phase difference between the second-phase clock and the first-phase clock or the phase difference between the third-phase clock and the first-phase clock.

In some implementations, the center position of the continuous correct sampling section in the scanning results corresponding to the filtered m-bit calibration flag corresponds to a 1-bit calibration flag, and a one-to-one corresponding relationship exists between the calibration flag and the receive sampling calibration code.

In some implementations, during the calibration performed by the receive sampling calibration module 207, fixed test data 8'b0000_1111 may be sent to the physical transmission channels, so as to control the adjustment performed by the phase interpolator 204 on the phase difference of the four-phase clock subjected to duty cycle adjustment.

In some implementations, as shown in FIG. 10, the receive sampling calibration module 207 includes a hardware-implemented first receive sampling calibration submodule 1001 and a software-implemented second receive sampling calibration submodule 1002.

In a case where no fault of the hardware-implemented first receive sampling calibration submodule 1001 is detected, the hardware-implemented first receive sampling calibration submodule 1001 is used to control, based on the data received by the physical receiving channels 301 and the phase difference of the four-phase clock subjected to duty cycle adjustment which is output by the phase interpolator 204, the adjustment performed by the phase interpolator 204 on the phase difference of the four-phase clock subjected to duty cycle adjustment.

In a case where a fault of the hardware-implemented first receive sampling calibration submodule 1001 is detected, the software-implemented second receive sampling calibration submodule 1002 is used to control, based on the data received by the physical receiving channels 301 and the phase difference of the four-phase clock subjected to duty cycle adjustment which is output by the phase interpolator 204, the adjustment performed by the phase interpolator 204 on the phase difference of the four-phase clock subjected to duty cycle adjustment.

In some implementations, the sending circuit 101 further includes a second clock calibration module 208 (e.g., a TX IO DCC calibration module shown in FIG. 14) configured to perform second phase skew calibration on the first-phase clock of the four-phase clock subjected to duty cycle adjustment to obtain a first clock corresponding to a corresponding physical sending channel 201.

The corresponding physical sending channel 201 is specifically configured to: receive the data from the upper layer, and send the received data based on the first clock obtained after the second phase skew calibration and the second clock.

In some implementations, the second clock calibration modules 208 corresponding to the different physical sending channels are different.

In some implementations, a part of the physical sending channels corresponds to a same second clock calibration module 208. For example, the n physical sending channels are divided into C groups, where C is an integer greater than or equal to 1; the physical sending channels in the same group multiplex a same second clock calibration module 208 for calibration, and the second clock calibration modules 208 corresponding to the physical sending channels in the different groups are different. Then, during the calibration, the physical sending channels in the same group multiplex the same second clock calibration module 208 for series calibration, and the physical sending channels in the different groups adopt the different second clock calibration modules 208 for parallel calibration. For example, 64 physical sending channels are divided into 8 groups, each group includes 8 physical sending channels, and 8 second clock calibration modules 208 are adopted for calibration; firstly, the 8 second clock calibration modules 208 are used to perform the second phase skew calibration on the first-phase clock of the four-phase clock subjected to duty cycle adjustment to obtain a first clock corresponding to a first physical sending channel in each group, the 8 second clock calibration modules 208 are multiplexed to perform the second phase skew calibration on the first-phase clock of the four-phase clock subjected to duty cycle adjustment to obtain a first clock corresponding to a second physical sending channel in each group after the calibration on the first physical sending channel in each group is completed, the 8 second clock calibration modules 208 are multiplexed to perform the second phase skew calibration on the first-phase clock of the four-phase clock subjected to duty cycle adjustment to obtain a first clock corresponding to a third physical sending channel in each group after the calibration on the second physical sending channel in each group is completed, and so on until the calibration on the 64 physical sending channels is completed.

In some implementations, the second clock calibration module 208 is specifically configured to: during the change of the duty cycle calibration code from 0 to the preset maximum value, periodically sample a comparison result from a comparator in the second clock calibration module 208, and record a first duty cycle calibration code when the sampled comparison result is jumped from a low level to a high level; during the change of the duty cycle calibration code from the preset maximum value to 0, periodically sample the comparison result from the comparator in the second clock calibration module 208, and record a second duty cycle calibration code when the sampled comparison result is jumped from a low level to a high level; and perform adjustment on a phase of the first-phase clock based on an average of the first duty cycle calibration code and the second duty cycle calibration code to obtain the first clock corresponding to the corresponding physical sending channel 201.

In some implementations, as shown in FIG. 11, the second clock calibration module 208 includes a hardware-implemented third clock calibration submodule 1101 and a software-implemented fourth clock calibration submodule 1102.

In a case where no fault of the hardware-implemented third clock calibration submodule 1101 is detected, the hardware-implemented third clock calibration submodule 1101 is used to perform the second phase skew calibration on the first-phase clock of the four-phase clock subjected to duty cycle adjustment to obtain the first clock corresponding to the corresponding physical sending channel.

In a case where a fault of the third clock calibration submodule 1101 is detected, the software-implemented fourth clock calibration submodule 1102 is used to perform the second phase skew calibration on the first-phase clock of the four-phase clock subjected to duty cycle adjustment to obtain the first clock corresponding to the corresponding physical sending channel.

In some implementations, the second clock transmission module 302 is specifically configured to: send the second-phase clock of the four-phase clock subjected to duty cycle adjustment to a third clock calibration module 304, determine the fourth clock based on the second-phase clock and the third-phase clock of the four-phase clock subjected to duty cycle adjustment, and send the fourth clock to the physical receiving channels 301.

The receiving circuit 102 further includes the third clock calibration module 304 (e.g., an RX IO DCC calibration module shown in FIG. 14) configured to perform third phase skew calibration on the second-phase clock of the four-phase clock subjected to duty cycle adjustment to obtain a third clock corresponding to a corresponding physical receiving channel 301.

The corresponding physical receiving channel 301 is specifically configured to: receive the data sent by the physical sending channel 201 based on the third clock obtained after the third phase skew calibration and the fourth clock, and cache the received data.

In some implementations, the third clock calibration modules 304 corresponding to the different physical receiving channels are different.

In some implementations, a part of the physical receiving channels corresponds to a same third clock calibration module 304. For example, the n physical receiving channels are divided into D groups, where D is an integer greater than or equal to 1; the physical receiving channels in the same group multiplex a same third clock calibration module 304 for calibration, and the third clock calibration modules 304 corresponding to the physical receiving channels in the different groups are different. Then, during the calibration, the physical receiving channels in the same group multiplex the same third clock calibration module 304 for series calibration, and the physical receiving channels in the different groups adopt the different third clock calibration modules 304 for parallel calibration. For example, 64 physical receiving channels are divided into 8 groups, each group includes 8 physical receiving channels, and 8 third clock calibration modules 304 are adopted for calibration; firstly, the 8 third clock calibration modules 304 are used to perform the third phase skew calibration on the second-phase clock of the four-phase clock subjected to duty cycle adjustment to obtain a third clock corresponding to a first physical receiving channel in each group, the 8 third clock calibration modules 304 are multiplexed to perform the third phase skew calibration on the second-phase clock of the four-phase clock subjected to duty cycle adjustment to obtain a third clock corresponding to a second physical receiving channel in each group after the calibration on the first physical receiving channel in each group is completed, the 8 third clock calibration modules 304 are multiplexed to perform the third phase skew calibration on the second-phase clock of the four-phase clock subjected to duty cycle adjustment to obtain a third clock corresponding to a third physical receiving channel in each group after the calibration on the second physical receiving channel in each group is completed, and so on until the calibration on the 64 physical receiving channels is completed.

In some implementations, the third clock calibration module 304 is specifically configured to: during the change of the duty cycle calibration code from 0 to the preset maximum value, periodically sample a comparison result from a comparator in the third clock calibration module 304, and record a third duty cycle calibration code when the sampled comparison result is jumped from a low level to a high level; during the change of the duty cycle calibration code from the preset maximum value to 0, periodically sample the comparison result from the comparator in the third clock calibration module 304, and record a fourth duty cycle calibration code when the sampled comparison result is jumped from a low level to a high level; and perform adjustment on a phase of the third-phase clock based on an average of the third duty cycle calibration code and the fourth duty cycle calibration code to obtain the third clock corresponding to the corresponding physical receiving channel.

In some implementations, as shown in FIG. 12, the third clock calibration module 304 includes a hardware-implemented fifth clock calibration submodule 1201 and a software-implemented sixth clock calibration submodule 1202.

In a case where no fault of the hardware-implemented fifth clock calibration submodule 1201 is detected, the hardware-implemented fifth clock calibration submodule 1201 is used to perform the third phase skew calibration on the second-phase clock of the four-phase clock subjected to duty cycle adjustment to obtain the third clock corresponding to the corresponding physical receiving channel.

In a case where a fault of the hardware-implemented fifth clock calibration submodule 1201 is detected, the software-implemented sixth clock calibration submodule 1202 is used to perform the third phase skew calibration on the second-phase clock of the four-phase clock subjected to duty cycle adjustment to obtain the third clock corresponding to the corresponding physical receiving channel.

In some implementations, the receiving circuit 102 further includes: a phase detection module 305 configured to detect a phase difference between the second-phase clock and a track clock; and a sixth clock calibration module 306 (e.g., an RX DLL calibration module shown in FIG. 14) configured to perform sixth phase skew calibration on the phase difference between the second-phase clock and the track clock, so as to enable the phase difference between the second-phase clock and the track clock to be less than one unit of DLL calibration code.

In some implementations, the sixth clock calibration module 306 is specifically configured to: perform adjustment on the DLL calibration code based on the phase difference between the second-phase clock and the track clock; perform adjustment on the phase difference between the second-phase clock and the track clock based on the DLL calibration code; and continue to perform the adjustment on the DLL calibration code based on the phase difference between the second-phase clock and the track clock until the phase difference between the second-phase clock and the track clock is less than one unit of the DLL calibration code.

In some implementations, the sixth clock calibration module 306 is specifically configured to perform the adjustment on the DLL calibration code based on the phase difference between the second-phase clock and the track clock in a following way: in a case where the phase difference between the second-phase clock and the track clock indicates that a phase of the second-phase clock precedes a phase of the track clock, increasing the DLL calibration code; and in a case where the phase difference between the second-phase clock and the track clock indicates that the phase of the second-phase clock lags behind the phase of the track clock, reducing the DLL calibration code.

In some implementations, as shown in FIG. 13, the sixth clock calibration module 306 includes a hardware-implemented eleventh clock calibration submodule 1301 and a software-implemented twelfth clock calibration submodule 1302.

In a case where no fault of the hardware-implemented eleventh clock calibration submodule 1301 is detected, the hardware-implemented eleventh clock calibration submodule 1301 is used to perform the sixth phase skew calibration on the phase difference between the second-phase clock and the track clock, so as to enable the phase difference between the second-phase clock and the track clock to be less than one unit of the DLL calibration code.

In a case where a fault of the hardware-implemented eleventh clock calibration submodule 1301 is detected, the software-implemented twelfth clock calibration submodule 1302 is used to perform the sixth phase skew calibration on the phase difference between the second-phase clock and the track clock, so as to enable the phase difference between the second-phase clock and the track clock to be less than one unit of the DLL calibration code.

According to the data processing apparatus provided in the embodiment of the present disclosure, by achieving cross-die data transmission through the n parallel physical sending channels and the n parallel physical receiving channels, signal bandwidth of data transmission is increased; and by calibrating the clock conversion module with the first clock calibration module and the offset voltage calibration module, wiring delay is reduced, data transmission delay is reduced, and reliability of data transmission is ensured.

In some implementations, the recovery process is performed on the sampled data by the digital sampling calibration module, so that the sampling delay of the digital-analog paths is reduced, the overall transmission delay is further reduced, and the reliability of data transmission is further improved.

In some implementations, the calibration modules implemented by hardware and software jointly perform corresponding calibration on the data processing apparatus, and ensure normal operation of the calibration, thereby further improving the reliability of data transmission.

In order to more fully present the data processing apparatus provided in the embodiment of the present disclosure, an example is illustrated below, but the illustrated example below does not limit the scope of the data processing apparatus provided in the embodiment of the present disclosure.

### Example

As shown in FIG. 14, the data processing apparatus includes the sending circuit and the receiving circuit.

The sending circuit includes: the n parallel physical sending channels, the offset voltage calibration module, the PLL, the DLL&DCC, a Central Processing Unit (CPU), the first DIV, the TX IO DCC calibration module, the phase interpolator, the RX sampling calibration module, and the TX DLL&DCC calibration module.

Each physical sending channel included in the DIE-1 includes: the first FIFO/REG, the Serializer (i.e., the analog serializer), and the first de-skew calibration module.

The first FIFO/REG is configured to cache the data received from the upper layer.

The Serializer (i.e., the analog serializer) is configured to read the data from the sending cache module (i.e., the first FIFO/REG) based on the first clock and the second clock.

The first de-skew calibration module is configured to perform the fourth phase skew calibration on the read data, and send the data subjected to the fourth phase skew calibration to the DIE-2.

The PLL is configured to output the single-ended clock.

The DLL&DCC is configured to convert the single-ended clock output by the PLL into the four-phase clock, perform duty cycle adjustment on the four-phase clock, send the first-phase clock of the four-phase clock subjected to duty cycle adjustment to the TX IO DCC calibration module, and send the first-phase clock and the second-phase clock to the first DIV.

The first DIV is configured to determine the second clock based on the first-phase clock and the second-phase clock of the four-phase clock subjected to duty cycle adjustment, and send the second clock to the Serializer.

The TX IO DCC calibration module is configured to perform the second phase skew calibration on the first-phase clock of the four-phase clock subjected to duty cycle adjustment to obtain a first clock corresponding to a corresponding physical sending channel.

The phase interpolator is configured to perform adjustment on the phase difference of the four-phase clock subjected to duty cycle adjustment.

The offset voltage calibration module is configured to perform the voltage offset calibration on the DLL&DCC.

The TX DLL&DCC calibration module is configured to perform the first phase skew calibration on the DLL&DCC subjected to voltage offset calibration.

The RX sampling calibration module is configured to control, based on the data received by the DIE-2 and the phase difference of the four-phase clock subjected to duty cycle adjustment which is output by the phase interpolator, the adjustment performed by the phase interpolator on the phase difference of the four-phase clock subjected to duty cycle adjustment.

The receiving circuit includes: the n parallel physical receiving channels, the RX IO DCC calibration module, the DCDL, the second DIV, the phase detection module, the RX DLL calibration module, the channel data calibration feedback module, the sideband transmission feedback module, and a CPU-configured Serial Peripheral Interface (SPI) transmission feedback module.

Each physical receiving channel included in the DIE-2 includes: the second de-skew calibration module, the Deserializer (i.e., the analog deserializer), the digital sampling calibration module, and the second FIFO/REG.

The second de-skew calibration module is configured to perform the fifth phase skew calibration on the data sent by the DIE-1.

The Deserializer (i.e., the analog deserializer) is configured to sample, based on the third clock and the fourth clock, the data subjected to the fifth phase skew calibration.

The digital sampling calibration module is configured to perform the recovery process on the sampled data.

The second FIFO/REG is configured to cache the recovered data.

The DCDL is configured to send the second-phase clock of the four-phase clock subjected to duty cycle adjustment to the RX IO DCC calibration module, and send the second-phase clock and the third-phase clock of the four-phase clock subjected to duty cycle adjustment to the second DIV.

The phase detection module is configured to detect the phase difference between the second-phase clock and the track clock.

The RX DLL calibration module is configured to perform sixth phase skew calibration on the phase difference between the second-phase clock and the track clock, so as to enable the phase difference between the second-phase clock and the track clock to be less than one unit of DLL calibration code.

The RX IO DCC calibration module is configured to perform the third phase skew calibration on the second-phase clock of the four-phase clock subjected to duty cycle adjustment to obtain a third clock corresponding to a corresponding physical receiving channel.

The second DIV is configured to determine the fourth clock based on the second-phase clock and the third-phase clock of the four-phase clock subjected to duty cycle adjustment, and send the fourth clock to the Deserializer.

The channel data calibration feedback module is configured to detect whether the data recovered by the DIE-2 is matched with the expected data, and send the data recovered by the DIE-2 to the RX sampling calibration module of the sending circuit through the sideband transmission feedback module in a case where it is detected that the data recovered by the DIE-2 is matched with the expected data.

The CPU-configured SPI transmission feedback module is configured to activate a software feedback channel of the RX sampling calibration module to the CPU, and establish cross-die SPI communication link.

The n parallel physical sending channels and the n parallel physical receiving channels form the n parallel physical transmission channels.

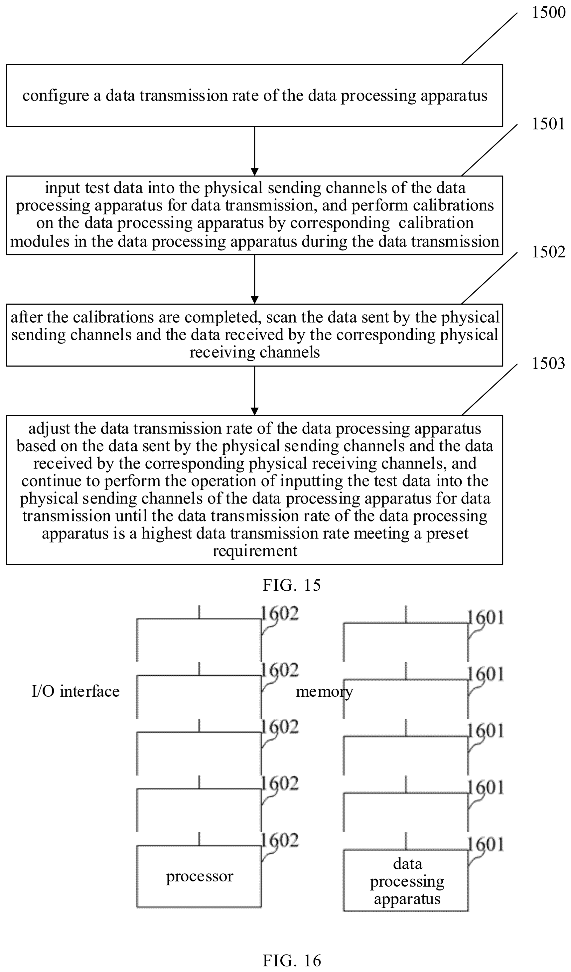

FIG. 15 is a flowchart illustrating a link training method according to an embodiment of the present disclosure.

In a second aspect, referring to FIG. 15, an embodiment of the present disclosure provides a link training method, including operations 1500 to 1503.

At operation 1500, a data transmission rate of the above data processing apparatus is configured.

In some implementations, configuring the data transmission rate of the above data processing apparatus (operation 1500) includes: configuring the data transmission rate of the data processing apparatus to be any one of N lowest rates, where n is an integer greater than or equal to 2.

In some implementations, after configuring the data transmission rate of the data processing apparatus to be any one of the N lowest rates, configuring the data transmission rate of the above data processing apparatus (operation 1500) further includes: in a case where the data processing apparatus operates normally at the low rate, configuring the data transmission rate of the data processing apparatus to be any one of M highest rates, where M is an integer greater than or equal to 2.

At operation 1501, test data is input into the physical sending channels of the data processing apparatus for data transmission; and during the data transmission, corresponding calibrations are performed on the data processing apparatus by calibration modules in the data processing apparatus.

At operation 1502, after the calibrations are completed, the data sent by the physical sending channels and the data received by the corresponding physical receiving channels are scanned.

At operation 1503, the data transmission rate of the data processing apparatus is adjusted based on the data sent by the physical sending channels and the data received by the corresponding physical receiving channels, and the operation of inputting the test data into the physical sending channels of the data processing apparatus for data transmission is continued until the data transmission rate of the data processing apparatus is a highest data transmission rate meeting a preset requirement.

In some implementations, adjusting the data transmission rate of the data processing apparatus based on the data sent by the physical sending channels and the data received by the corresponding physical receiving channels (operation 1503) includes: determining a bit error rate based on the data sent by the physical sending channels and the data received by the corresponding physical receiving channels; and adjusting the data transmission rate of the data processing apparatus based on the bit error rate.

In some implementations, meeting the preset requirement refers to that the bit error rate meets the preset requirement.

In some implementations, adjusting the data transmission rate of the data processing apparatus based on the bit error rate includes: in a case where the bit error rate meets the preset requirement, increasing the data transmission rate of the data processing apparatus; and in a case where the bit error rate does not meet the preset requirement, reducing the data transmission rate of the data processing apparatus.

In some implementations, the link training method further includes: configuring the data transmission rate of the data processing apparatus to be the highest data transmission rate meeting the preset requirement; and performing data transmission based on the highest data transmission rate meeting the preset requirement.

In some implementations, link training may be performed in a Valid test mode, and may also be performed in a BIST signal test mode.

In some implementations, whether the bit error rate meets the preset requirement may be determined in the Valid test mode, and may also be determined in the BIST signal test mode.

In some implementations, during the data transmission, when the calibration module feeds a fatal error back, the data transmission is ended, and the link training is performed again.

By performing link training on the data processing apparatus with the link training method provided in the embodiment of the present disclosure, reliability of data transmission is ensured.

In a third aspect, referring to FIG. 16, an embodiment of the present disclosure provides an electronic device, including: the above data processing apparatus 1601; at least one processor 1602; and a memory 1603 having stored thereon at least one computer program which, when executed by the at least one processor 1602, causes the at least one processor 1602 to implement the above mentioned link training method.

In some implementations, the electronic device may further include at least one Input/output (I/O) interface 1604 connected between the at least one processor 1602 and the memory 1603 and configured to enable information interaction between the at least one processor 1602 and the memory 1603.

The processor 1602 is a device having a data processing capability, and includes, but is not limited to, a CPU; the memory 1603 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 1604 is connected between the processor 1602 and the memory 1603, is capable of enabling the information interaction between the processor 1602 and the memory 1603, and includes, but is not limited to, a data bus (Bus).

In some implementations, the processor 1602, the memory 1603, and the I/O interface 1604 are connected to each other through a bus 1605, and then are connected to other components of a computing device.

In a fourth aspect, an embodiment of the present disclosure provides a computer-readable storage medium having stored thereon a computer program which, when executed by a processor, causes the processor to implement the above link training method.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

## Claims

1. A data processing apparatus, comprising: a sending circuit and a receiving circuit;
wherein the sending circuit comprises n parallel physical sending channels, the receiving circuit comprises n parallel physical receiving channels, and n is an integer greater than or equal to 2;
wherein the physical sending channels are configured to receive data from an upper layer, and send the received data based on a first clock and a second clock; and the physical receiving channels are configured to receive the data sent by the physical sending channels based on a third clock and a fourth clock, and cache the received data.

2. The data processing apparatus of claim 1, wherein the sending circuit further comprises a clock conversion module, a first clock transmission module, a phase interpolator, a first clock calibration module, and an offset voltage calibration module, and the receiving circuit further comprises a second clock transmission module;
wherein the clock conversion module is configured to convert a single-ended clock output by a phase locked loop into a four-phase clock, perform duty cycle adjustment on the four-phase clock, and send a first-phase clock of the four-phase clock subjected to duty cycle adjustment to the physical sending channels as the first clock;
wherein the first clock transmission module is configured to determine the second clock based on the first-phase clock and a second-phase clock of the four-phase clock subjected to duty cycle adjustment, and send the second clock to the physical sending channels;
wherein the phase interpolator is configured to perform adjustment on a phase difference of the four-phase clock subjected to duty cycle adjustment;
wherein the second clock transmission module is configured to send the second-phase clock of the four-phase clock subjected to duty cycle adjustment to the physical receiving channels as the third clock, determine the fourth clock based on the second-phase clock and a third-phase clock of the four-phase clock subjected to duty cycle adjustment, and send the fourth clock to the physical receiving channels;
wherein the first clock calibration module is configured to perform first phase skew calibration on the clock conversion module; and
wherein the offset voltage calibration module is configured to perform voltage offset calibration on the clock conversion module.

3. The data processing apparatus of claim 2, wherein the receive circuit further comprises:
a channel data calibration feedback module configured to detect whether the data received by the physical receiving channels is matched with expected data, and send the data received by the physical receiving channels to a receive sampling calibration module of the sending circuit through a sideband transmission feedback module in a case where it is detected that the data received by the physical receiving channels is matched with the expected data; and
the sending circuit further comprises:
the receive sampling calibration module configured to control, based on the data received by the physical receiving channels and the phase difference of the four-phase clock subjected to duty cycle adjustment which is output by the phase interpolator, the adjustment performed by the phase interpolator on the phase difference of the four-phase clock subjected to duty cycle adjustment.

4. The data processing apparatus of claim 3, wherein the receive sampling calibration module is configured to:
scan, by taking a preset step as a period, the phase difference of the four-phase clock subjected to duty cycle adjustment which is output by the phase interpolator;
determine a 1-bit calibration flag based on a scanning result and the data received by the physical receiving channels;
continue to perform the operation of scanning, by taking the preset step as the period, the phase difference of the four-phase clock subjected to duty cycle adjustment which is output by the phase interpolator until an m-bit calibration flag is obtained, wherein m is an integer greater than or equal to 2;
filter the m-bit calibration flag;
determine a receive sampling calibration code based on a center position of a continuous correct sampling section in the scanning results corresponding to the filtered m-bit calibration flag; and
control, based on the receive sampling calibration code, the adjustment performed by the phase interpolator on the phase difference of the four-phase clock subjected to duty cycle adjustment.

5. The data processing apparatus of claim 3, wherein the receive sampling calibration module comprises a hardware-implemented first receive sampling calibration submodule and a software-implemented second receive sampling calibration submodule;
in a case where no fault of the hardware-implemented first receive sampling calibration submodule is detected, the hardware-implemented first receive sampling calibration submodule is used to control, based on the data received by the physical receiving channels and the phase difference of the four-phase clock subjected to duty cycle adjustment which is output by the phase interpolator, the adjustment performed by the phase interpolator on the phase difference of the four-phase clock subjected to duty cycle adjustment; and
in a case where a fault of the hardware-implemented first receive sampling calibration submodule is detected, the software-implemented second receive sampling calibration submodule is used to control, based on the data received by the physical receiving channels and the phase difference of the four-phase clock subjected to duty cycle adjustment which is output by the phase interpolator, the adjustment performed by the phase interpolator on the phase difference of the four-phase clock subjected to duty cycle adjustment.

6. The data processing apparatus of claim 2, wherein the sending circuit further comprises:
a second clock calibration module configured to perform second phase skew calibration on the first-phase clock of the four-phase clock subjected to duty cycle adjustment to obtain a first clock corresponding to a corresponding physical sending channel; and
the corresponding physical sending channel is configured to receive the data from the upper layer, and send the received data based on the first clock obtained after the second phase skew calibration and the second clock.

7. The data processing apparatus of claim 6, wherein the second clock calibration module is configured to:
during a change of a duty cycle calibration code from 0 to a preset maximum value, periodically sample a comparison result from a comparator in the second clock calibration module, and record a first duty cycle calibration code when the sampled comparison result is jumped from a low level to a high level;
during a change of the duty cycle calibration code from the preset maximum value to 0, periodically sample the comparison result from the comparator in the second clock calibration module, and record a second duty cycle calibration code when the sampled comparison result is jumped from a low level to a high level; and
perform adjustment on a phase of the first-phase clock based on an average of the first duty cycle calibration code and the second duty cycle calibration code to obtain the first clock corresponding to the corresponding physical sending channel.

8. The data processing apparatus of claim 6, wherein the second clock calibration module comprises a hardware-implemented third clock calibration submodule and a software-implemented fourth clock calibration submodule;
in a case where no fault of the hardware-implemented third clock calibration submodule is detected, the hardware-implemented third clock calibration submodule is used to perform the second phase skew calibration on the first-phase clock of the four-phase clock subjected to duty cycle adjustment to obtain the first clock corresponding to the corresponding physical sending channel; and
in a case where a fault of the third clock calibration submodule is detected, the software-implemented fourth clock calibration submodule is used to perform the second phase skew calibration on the first-phase clock of the four-phase clock subjected to duty cycle adjustment to obtain the first clock corresponding to the corresponding physical sending channel.

9. The data processing apparatus of claim 2, wherein the receive circuit further comprises:
a third clock calibration module configured to perform third phase skew calibration on the second-phase clock of the four-phase clock subjected to duty cycle adjustment to obtain a third clock corresponding to a corresponding physical receiving channel; and
the corresponding physical receiving channel is configured to receive the data sent by a physical sending channel based on the third clock obtained after the third phase skew calibration and the fourth clock, and cache the received data.

10. The data processing apparatus of claim 9, wherein the third clock calibration module is configured to:
during a change of a duty cycle calibration code from 0 to a preset maximum value, periodically sample a comparison result from a comparator in the third clock calibration module, and record a third duty cycle calibration code when the sampled comparison result is jumped from a low level to a high level;
during a change of the duty cycle calibration code from the preset maximum value to 0, periodically sample the comparison result from the comparator in the third clock calibration module, and record a fourth duty cycle calibration code when the sampled comparison result is jumped from a low level to a high level; and
perform adjustment on a phase of the third-phase clock based on an average of the third duty cycle calibration code and the fourth duty cycle calibration code to obtain the third clock corresponding to the corresponding physical receiving channel.

11. The data processing apparatus of claim 9, wherein the third clock calibration module comprises a hardware-implemented fifth clock calibration submodule and a software-implemented sixth clock calibration submodule;
in a case where no fault of the hardware-implemented fifth clock calibration submodule is detected, the hardware-implemented fifth clock calibration submodule is used to perform the third phase skew calibration on the second-phase clock of the four-phase clock subjected to duty cycle adjustment to obtain the third clock corresponding to the corresponding physical receiving channel; and
in a case where a fault of the hardware-implemented fifth clock calibration submodule is detected, the software-implemented sixth clock calibration submodule is used to perform the third phase skew calibration on the second-phase clock of the four-phase clock subjected to duty cycle adjustment to obtain the third clock corresponding to the corresponding physical receiving channel.

12. The data processing apparatus of claim 1, wherein the data processing apparatus comprises a first set of the sending circuit and the receiving circuit and a second set of the sending circuit and the receiving circuit; and
the n physical sending channels in the first set of the sending circuit and the receiving circuit and the n physical receiving channels in the second set of the sending circuit and the receiving circuit are located on a first die, and the n physical receiving channels in the first set of the sending circuit and the receiving circuit and the n physical sending channels in the second set of the sending circuit and the receiving circuit are located on a second die.

13. The data processing apparatus of any one of claims 1 to 12, wherein each physical sending channel comprises:
a sending cache module configured to cache the data received from the upper layer; and
an analog serializer configured to read the data from the sending cache module based on the first clock and the second clock, and send the read data; and
each physical receiving channel comprises:
an analog deserializer configured to sample, based on the third clock and the fourth clock, the data sent by the physical sending channel; and
a receiving cache module configured to cache the sampled data.

14. The data processing apparatus of claim 13, wherein the physical sending channel further comprises: a fourth clock calibration module configured to perform fourth phase skew calibration on the data read by the analog serializer, and send the data subjected to the fourth phase skew calibration to the physical receiving channel;
the physical receiving channel further comprises: a fifth clock calibration module configured to perform fifth phase skew calibration on the data sent by the physical sending channel; and
the analog deserializer is configured to sample, based on the third clock and the fourth clock, the data subjected to the fifth phase skew calibration.

15. The data processing apparatus of claim 14, wherein the fourth clock calibration module comprises a hardware-implemented seventh clock calibration submodule and a software-implemented eighth clock calibration submodule;
in a case where no fault of the hardware-implemented seventh clock calibration submodule is detected, the hardware-implemented seventh clock calibration submodule is used to perform the fourth phase skew calibration on the data read by the analog serializer, and send the data subjected to the fourth phase skew calibration to the physical receiving channel; and
in a case where a fault of the hardware-implemented seventh clock calibration submodule is detected, the software-implemented eighth clock calibration submodule is used to perform the fourth phase skew calibration on the data read by the analog serializer, and send the data subjected to the fourth phase skew calibration to the physical receiving channel.

16. The data processing apparatus of claim 14, wherein the fifth clock calibration module comprises a hardware-implemented ninth clock calibration submodule and a software-implemented tenth clock calibration submodule;
in a case where no fault of the hardware-implemented ninth clock calibration submodule is detected, the hardware-implemented ninth clock calibration submodule is used to perform the fifth phase skew calibration on the data sent by the physical sending channel; and
in a case where a fault of the hardware-implemented ninth clock calibration submodule is detected, the software-implemented tenth clock calibration submodule is used to perform the fifth phase skew calibration on the data sent by the physical sending channel.

17. The data processing apparatus of claim 13, wherein the physical receiving channel further comprises: a digital sampling calibration module configured to perform a recovery process on the sampled data; and
the receiving cache module is configured to cache the recovered data.

18. The data processing apparatus of any one of claims 1 to 12, wherein the receiving circuit further comprises:
a phase detection module configured to detect a phase difference between the second-phase clock and a track clock; and
a sixth clock calibration module configured to perform sixth phase skew calibration on the phase difference between the second-phase clock and the track clock, so as to enable the phase difference between the second-phase clock and the track clock to be less than one unit of delay lock loop calibration code.

19. The data processing apparatus of claim 18, wherein the sixth clock calibration module is configured to:
perform adjustment on the delay lock loop calibration code based on the phase difference between the second-phase clock and the track clock;
perform adjustment on the phase difference between the second-phase clock and the track clock based on the delay lock loop calibration code; and
continue to perform the adjustment on the delay lock loop calibration code based on the phase difference between the second-phase clock and the track clock until the phase difference between the second-phase clock and the track clock is less than one unit of the delay lock loop calibration code.

20. The data processing apparatus of claim 18, wherein the sixth clock calibration module comprises a hardware-implemented eleventh clock calibration submodule and a software-implemented twelfth clock calibration submodule;
in a case where no fault of the hardware-implemented eleventh clock calibration submodule is detected, the hardware-implemented eleventh clock calibration submodule is used to perform the sixth phase skew calibration on the phase difference between the second-phase clock and the track clock, so as to enable the phase difference between the second-phase clock and the track clock to be less than one unit of the delay lock loop calibration code; and
in a case where a fault of the hardware-implemented eleventh clock calibration submodule is detected, the software-implemented twelfth clock calibration submodule is used to perform the sixth phase skew calibration on the phase difference between the second-phase clock and the track clock, so as to enable the phase difference between the second-phase clock and the track clock to be less than one unit of the delay lock loop calibration code.

21. The data processing apparatus of any one of claims 1 to 12, wherein the offset voltage calibration module is configured to:
periodically sample a comparison result from a comparator in the clock conversion module;
adjust an offset voltage control word based on a ratio of high level to low level in the sampled comparison results;
adjust a voltage of the clock conversion module based on the adjusted offset voltage control word; and
continue to perform the operation of periodically sampling the comparison result from the comparator in the clock conversion module until the ratio of high level to low level is 1.

22. The data processing apparatus of any one of claims 1 to 12, wherein the first clock calibration module is configured to:
perform coarse adjustment calibration and fine adjustment calibration on a phase difference of the four-phase clock; and
perform calibration on the phase difference of the four-phase clock subjected to duty cycle adjustment.

23. The data processing apparatus of claim 22, wherein the first clock calibration module is configured to perform the coarse adjustment calibration and the fine adjustment calibration on the phase difference of the four-phase clock in a following way:
setting an initial value of a coarse adjustment calibration code to 0;
periodically sampling a comparison result from a comparator in the clock conversion module;
adjusting the coarse adjustment calibration code based on a ratio of high level to low level in the sampled comparison result;
performing adjustment on the phase difference of the four-phase clock based on the adjusted coarse adjustment calibration code;
continuing to perform the operation of periodically sampling the comparison result from the comparator in the clock conversion module until the ratio of high level to low level is 1;
setting an initial value of a fine adjustment calibration code to 256;
periodically sampling the comparison result from the comparator in the clock conversion module;
adjusting the fine adjustment calibration code based on a ratio of high level to low level in the sampled comparison result;
performing adjustment on the phase difference of the four-phase clock based on the adjusted fine adjustment calibration code; and
continuing to perform the operation of periodically sampling the comparison result from the comparator in the clock conversion module until the ratio of high level to low level is 1.

24. The data processing apparatus of claim 22, wherein the first clock calibration module is configured to perform calibration on the phase difference of the four-phase clock subjected to duty cycle adjustment in a following way:
during a change of a duty cycle calibration code from 0 to a preset maximum value, periodically sampling a comparison result from a comparator in the clock conversion module, and recording a first duty cycle calibration code when the sampled comparison result is jumped from a low level to a high level;
during a change of the duty cycle calibration code from the preset maximum value to 0, periodically sampling the comparison result from the comparator in the clock conversion module, and recording a second duty cycle calibration code when the sampled comparison result is jumped from a low level to a high level; and
performing adjustment on the phase difference of the four-phase clock subjected to duty cycle adjustment based on an average of the first duty cycle calibration code and the second duty cycle calibration code.

25. The data processing apparatus of any one of claims 1 to 12, wherein the first clock calibration module comprises a hardware-implemented first clock calibration submodule and a software-implemented second clock calibration submodule;
in a case where no fault of the hardware-implemented first clock calibration submodule is detected, the hardware-implemented first clock calibration submodule is used to perform the first phase skew calibration on the clock conversion module; and
in a case where a fault of the hardware-implemented first clock calibration submodule is detected, the software-implemented second clock calibration submodule is used to perform the first phase skew calibration on the clock conversion module.

26. The data processing apparatus of any one of claims 1 to 12, wherein the offset voltage calibration module comprises a hardware-implemented first offset voltage calibration submodule and a software-implemented second offset voltage calibration submodule;
in a case where no fault of the hardware-implemented first offset voltage calibration submodule is detected, the hardware-implemented first offset voltage calibration submodule is used to perform the voltage offset calibration on the clock conversion module; and
in a case where a fault of the hardware-implemented first offset voltage calibration submodule is detected, the software-implemented second offset voltage calibration submodule is used to perform the voltage offset calibration on the clock conversion module.

27. A link training method, comprising:
configuring a data transmission rate of the data processing apparatus of any one of claims 1 to 26;
inputting test data into the physical sending channels of the data processing apparatus for data transmission, wherein calibrations are performed on the data processing apparatus by corresponding calibration modules in the data processing apparatus during the data transmission;
after the calibrations are completed, scanning the data sent by the physical sending channels and the data received by the corresponding physical receiving channels; and
adjusting the data transmission rate of the data processing apparatus based on the data sent by the physical sending channels and the data received by the corresponding physical receiving channels, and continuing to perform the operation of inputting the test data into the physical sending channels of the data processing apparatus for data transmission until the data transmission rate of the data processing apparatus is a highest data transmission rate meeting a preset requirement.

28. The link training method of claim 27, further comprising:
configuring the data transmission rate of the data processing apparatus to be the highest data transmission rate meeting the preset requirement; and
performing data transmission based on the highest data transmission rate meeting the preset requirement.

29. The link training method of claim 27 or 28, wherein configuring the data transmission rate of the data processing apparatus of any one of claims 1 to 24 comprises:
configuring the data transmission rate of the data processing apparatus to be any one of N lowest rates, wherein N is an integer greater than or equal to 2.

30. The link training method of claim 29, wherein after configuring the data transmission rate of the data processing apparatus to be any one of the N lowest rates, configuring the data transmission rate of the data processing apparatus of any one of claims 1 to 24 further comprises:
in a case where the data processing apparatus operates normally at a low rate, configuring the data transmission rate of the data processing apparatus to be any one of M highest rates, wherein M is an integer greater than or equal to 2.

31. The link training method of claim 27 or 28, wherein adjusting the data transmission rate of the data processing apparatus based on the data sent by the physical sending channels and the data received by the corresponding physical receiving channels comprises:
determining a bit error rate based on the data sent by the physical sending channels and the data received by the corresponding physical receiving channels; and
adjusting the data transmission rate of the data processing apparatus based on the bit error rate.

32. An electronic device, comprising:
the data processing apparatus of any one of claims 1 to 26;
at least one processor; and
a memory having stored thereon at least one computer program which, when executed by the at least one processor, causes the at least one processor to implement the link training method of any one of claims 27 to 31.

33. A computer-readable storage medium having stored thereon a computer program which, when executed by a processor, causes the processor to implement the link training method of any one of claims 27 to 31.
